# EUROPEAN PATENT APPLICATION

(11) **EP 3 171 660 A1**
(43) Date of publication of application: **24.05.2017**
(21) Application number: 15822433.7
(22) Date of filing: 07.07.2015
(51) Int. Cl.: H04W 80/00, H04W 4/14, H04W 16/26, H04W 84/22, H04W 88/18, H04W 92/24

(54) **COMMUNICATION SYSTEM, RELAY DEVICE, CONTROL METHOD, AND RECORDING MEDIUM**

(30) Priority: 14.07.2014 JP 2014144360
(71) Applicant: NEC Corporation, Tokyo 108-8001 (JP)
(72) Inventor: KOGURE, Tomoya, Tokyo 108-8001 (JP); WATANABE, Yasuhiro, Tokyo 108-0073 (JP); KIDO, Takayuki, Tokyo 108-8001 (JP); AKIMOTO, Takuo, Tokyo 108-8001 (JP); MIYAGAWA, Yusuke, Tokyo 108-8001 (JP); NAKANISHI, Yuki, Tokyo 108-8001 (JP); NAKAMURA, Atsushi, Tokyo 108-8001 (JP)
(74) Representative: Betten & Resch
(86) International application number: PCT/JP2015/003393
(87) International publication number: WO 2016/009610

(57) **Abstract**

The present invention enables communication between different communication networks. The communication system 1 according to the present invention has: an SMSC 14 which is provided in a mobile network 10 over which a user terminal 2 performs communication through a wireless base station, and transmits a message to the user terminal 2; a GW 21 which is provided in an autonomous distributed network 20 over which a plurality of user terminals performs direct communication, and communicates with at least one of the plurality of user terminals 2; and a relay device 32 (32a) which, upon receiving a message transmitted using a predetermined protocol from one device of the SMSC 14 and the GW 21, performs communication, which corresponds to a message received from the other device, using a protocol that is used for communication with the other device and is different from the predetermined protocol.

## Description

### [Technical Field]

The present invention relates to a communication system, a relay device, a control method, and a recording medium.

### [Background Art]

One of communication networks includes a wireless communication network (mobile network) such as 3G (third generation mobile communication network) and LTE (Long Term Evolution). In a mobile network, a user equipment (UE) performs communication via a wireless base station to receive a service provided in a network.

An example of a service provided in a mobile network includes SMS (Short Message Service). SMS is a service for transmitting and receiving a message (SMS message) via a network between UEs, and for example, SMS is used for safety confirmation during disaster.

In order for a UE to transmit and receive an SMS message, the UE is required to be able to perform communication (to be able to connect to a mobile network) via a wireless base station. Therefore, when the UE is unable to connect to the network because, e.g., a device constituting the mobile network malfunctions, the UE is unable to transmit and receive any SMS message.

Another communication network other than the mobile network includes an autonomous distributed network in which UEs directly perform wireless communication (inter-terminal direct communication) (for example, see PTL 1 (Japanese Patent Laid-Open No. 2013-126158)). In the autonomous distributed network, unlike the mobile network, a UE can directly transmit and receive a message to and from another UE existing around the UE without relying on any base station.

### [Citation List]

### [Patent Literature]

[PTL 1] Japanese Patent Laid-Open No. 2013-126158

### [Summary of Invention]

### [Technical Problem]

As described above, in the mobile network, when a device constituting the mobile network malfunctions due to a disaster or the like and the UE is unable to connect to the network, a communication failure occurs, such as a failure in which any message cannot be transmitted and received. Therefore, it is desired to develop a communication system capable of ensuring communication means even at the time of disaster and preventing occurrence of a communication failure. As an example of such a communication system, a communication system obtained by combining a mobile network and an autonomous distributed network has been considered.

As described above, in the autonomous distributed network, the UE can directly transmit and receive a message to and from another UE. Therefore, even in a case where the UE is unable to connect to the mobile network, UEs in proximity to each other can transmit and receive a message by performing inter-terminal direct communication. However, in the autonomous distributed network, those that can transmit and receive a message are limited to the UEs in proximity to each other. Therefore, the mobile network and the autonomous distributed network may be combined, and in an area in which the UE cannot connect to the mobile network, it is considered to deliver a message by using the autonomous distributed network, and in the other area, to deliver a message by using the mobile network. By doing so, messages can be transmitted and received even between the UE in the area in which the UE cannot connect to the mobile network and the UE in the other area.

In the above communication system, transmission and reception of messages over the mobile network and the autonomous distributed network is required. However, normally, the protocol used for communication is different between the mobile network and the autonomous distributed network, and in the current circumstances, a concrete method capable of realizing communication between these networks has not yet been considered.

It is an object of the present invention to provide a communication system, a relay device, a control method, and a recording medium capable of realizing communication between different communication networks.

### [Solution to Problem]

In order to achieve the above object, a communication system according to the present invention includes:
a service control device provided in a first network in which a user equipment performs communication via a wireless base station, and configured to deliver a message to the user equipment;
a gateway device provided in a second network in which a plurality of user equipment perform direct communication, and configured to perform communication with at least one of the plurality of user equipments; and
a relay device configured to, when the relay device receives a message transmitted using a predetermined protocol from one of the service control device and the gateway device, use a protocol that is different from the predetermined protocol and that is used for communication with the other of the service control device and the gateway device to perform communication in response to the received message with the other of the service control device and the gateway device.

In order to achieve the above object, a relay device according to the present invention includes:
a first communication unit for communicating with a service control device provided in a first network in which a user equipment performs communication via a wireless base station and configured to deliver a message to the user equipment;
a second communication unit for communicating with a gateway device provided in a second network in which a plurality of user equipments perform direct communication and configured to perform communication with at least one of the plurality of user equipments; and
a control unit configured to, when the control means receives a message transmitted using a predetermined protocol from one of the service control device and the gateway device, use a protocol that is different from the predetermined protocol and that is used for communication with the other of the service control device and the gateway device to perform communication in response to the received message with the other of the service control device and the gateway device.

In order to achieve the above object, a control method of a relay device according to the present invention, wherein the relay device is provided with a first communication unit for communicating with a service control device provided in a first network in which a user equipment performs communication via a wireless base station and configured to deliver a message to the user equipment, and a second communication unit for communicating with a gateway device provided in a second network in which a plurality of user equipments perform direct communication and configured to perform communication with at least one of the plurality of user equipments,
when the relay device receives a message transmitted using a predetermined protocol from one of the service control device and the gateway device, the relay device uses a protocol that is different from the predetermined protocol and that is used for communication with the other of the service control device and the gateway device to perform communication in response to the received message with the other of the service control device and the gateway device.

In order to achieve the above object, a recording medium according to the present invention is a computer readable non-transitory recording medium recorded with a program for causing a computer to execute:
processing for communicating with a service control device provided in a first network in which a user equipment performs communication via a wireless base station and configured to deliver a message to the user equipment;
processing for communicating with a gateway device provided in a second network in which a plurality of user equipments perform direct communication and configured to perform communication with at least one of the plurality of user equipments; and
processing for, when receiving a message transmitted using a predetermined protocol from one of the service control device and the gateway device, performing communication in response to the received message with the other of the service control device and the gateway device using a protocol that is different from the predetermined protocol and that is used for communication with the other of the service control device and the gateway device.

### [Advantageous Effect of Invention]

According to the present invention, communication between different communication networks can be realized.

### [Brief Description of Drawings]

[Fig. 1] Fig. 1 is a figure illustrating a configuration of a communication system according to an exemplary embodiment of the present invention.
[Fig. 2] Fig. 2 is a block diagram illustrating a configuration of a server illustrated in Fig. 1.
[Fig. 3] Fig. 3 is a block diagram illustrating a configuration of a relay device illustrated in Fig. 1.
[Fig. 4] Fig. 4 is a block diagram illustrating another configuration of a relay device according to an exemplary embodiment of the present invention.
[Fig. 5] Fig. 5 is a figure illustrating an operation during transmission and reception of a message between UEs which belong to different groups in the communication system illustrated in Fig. 1.
[Fig. 6] Fig. 6 is a figure illustrating an example of a message transmitted by a UE 2a illustrated in Fig. 5.
[Fig. 7] Fig. 7 is a figure illustrating an operation during transmission of a message from a UE 2a to a UE 2d in the communication system illustrated in Fig. 1.
[Fig. 8] Fig. 8 is a figure illustrating an example of a message transmitted by the UE 2a illustrated in Fig. 7.
[Fig. 9] Fig. 9 is a figure illustrating an operation during position registration of the UE 2a in the communication system illustrated in Fig. 1.
[Fig. 10] Fig. 10 is a figure illustrating an example of a message transmitted by the UE 2a illustrated in Fig. 9.
[Fig. 11] Fig. 11 is a figure illustrating an operation during transmission of a message from the UE 2d to the UE 2a in the communication system illustrated in Fig. 1.
[Fig. 12] Fig. 12 is a figure illustrating an example of a message received by the UE 2a illustrated in Fig. 11.
[Fig. 13] Fig. 13 is a sequence diagram illustrating an operation during position registration of the UE 2a in the communication system illustrated in Fig. 1.
[Fig. 14] Fig. 14 is a sequence diagram illustrating an operation during transmission of a message from the UE 2a to the UE 2d in the communication system illustrated in Fig. 1.
[Fig. 15] Fig. 15 is a sequence diagram illustrating an operation during transmission of a message from the UE 2d to the UE 2a in the communication system illustrated in Fig. 1.
[Figs. 16 (a) and 16 (b)] Figs. 16 (a) and 16 (b) are figures illustrating an example of a protocol stack in the communication system illustrated in Fig. 1.
[Figs. 17 (a) and 17 (b)] Figs. 17 (a) and 17 (b) are figures illustrating an example of a protocol stack in the communication system illustrated in Fig. 1.

### [Description of Embodiments]

Hereinafter, modes for carrying out the present invention will explained with reference to drawings.

### (First exemplary embodiment)

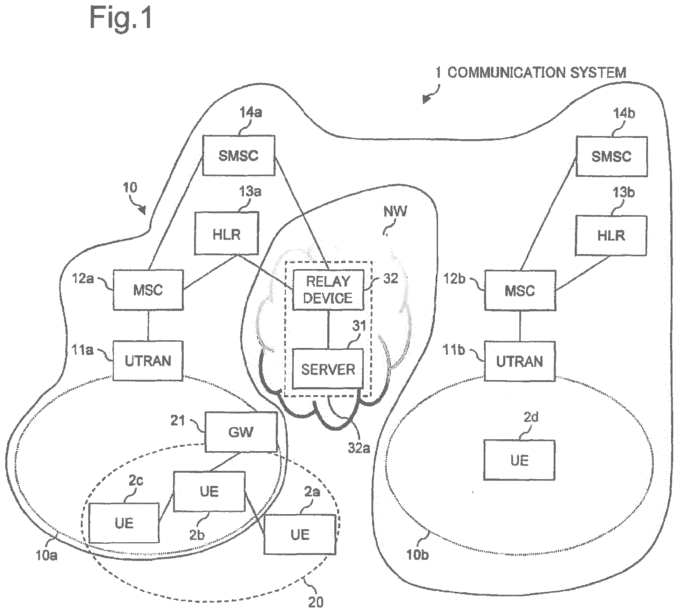

Fig. 1 is a figure illustrating a configuration of a main portion of a communication system according to an exemplary embodiment of the present invention.

A communication system 1 illustrated in Fig. 1 is a communication system including a mobile network 10 serving as a first network in which UEs 2 (UE 2a to UE 2d) perform communication via a wireless base station and an autonomous distributed network 20 serving as a second network in which UEs 2 directly perform wireless communication (inter-terminal direct communication) with each other. A specific example of a mobile network 10 includes a wireless communication network such as 3G and LTE. Methods of inter-terminal direct communications include methods using WiFi (wireless Fidelity) (registered trademark), WiFi-Direct, Bluetooth (registered trademark), LTE-Direct, and the like.

The UE 2 includes at least one of a function for performing communication (connecting to the mobile network 10) via the wireless base station and a function for performing inter-terminal direct communication. In a case where the UE 2 performs the inter-terminal direct communication, the UE 2 forms a group with another UE 2 in proximity, and performs inter-terminal direct communication with the UE 2 in the group.

The communication system 1 includes UEs 2 (UE 2a to UE 2d), UTRAN (Universal Terrestrial Radio Access Network) 11 (11a, 11b), MSC (Mobile Switching Center) 12 (12a, 12b), HLR (Home Location Register) 13 (13a, 13b), SMSC (Short Message Service Center) 14 (14a, 14b), a gateway device (GW: Gateway) 21, a server 31, and a relay device 32.

The UTRAN 11 a is a wireless access network including a wireless base station, a wireless network control device, and the like, and forms a predetermined communication area 10a.

The MSC 12a is a switching center for performing a caller connection control for the UE 2 in the communication area 10a, transmission of SMS messages, and the like.

The HLR 13a is a management device for managing the position registration of a UE 2. More specifically, the HLR 13a stores subscriber information about the UE 2 and the position of the UE 2 (an area in which the UE 2 is present) in such a manner that the subscriber information and the position of the UE 2 are associated with each other.

The SMSC 14a performs delivery control of messages using SMS (SMS messages). The SMSC 14a is an example of a service control device.

The UTRAN 11b, the MSC 12b, the HLR 13b, and the SMSC 14b perform processing similar to those performed by the UTRAN 11a, the MSC 12a, the HLR 13a, and the SMSC 14a, respectively, and therefore, the explanation thereabout is omitted. However, the UTRAN 11b forms a communication area 10b, and the MSC 12b, the HLR 13b, and the SMSC 14b are configured to perform processing for the UE 2 in the communication area 10b.

The MSC 12, the HLR 13, and the SMSC 14 constitute a core network, and as illustrated in Fig. 1, the mobile network 10 is constituted by this core network and the wireless access network constituted by the UTRAN 11. Although not shown in the subsequent drawings, the range of the mobile network 10 is the same.

The GW 21 is provided in the autonomous distributed network 20 in which the UEs 2 perform the inter-terminal direct communication with each other, and is configured to manage the group of the UEs 2 that perform the inter-terminal direct communication. The GW 21 communicates with at least one UE 2 in the group that is managed by the GW 21. A UE 2 that is one of multiple UEs 2 forming the group and which communicates with the GW 21 managing the group is determined by any given method.

The server 31 is provided on a network NW connecting the mobile network 10 and the autonomous distributed network 20, and is configured to relay messages.

The relay device 32 is provided on the network NW and is connected to the server 31, and the relay device 32 is also connected to the HLR 13a and the SMSC 14a provided on the mobile network 10. When the relay device 32 receives a message transmitted using a predetermined protocol from one of the devices in the mobile network 10 and the devices in the autonomous distributed network 20, the relay device 32 performs communication in response to the received message to and from the other of the devices by using a protocol that is different from the predetermined protocol and that is used for the communication with the other of the devices.

More specifically, when, for example, the relay device 32 receives a message transmitted using a predetermined protocol (for example, IP (Internet Protocol)) via the server 31 from the GW 21, the relay device 32 performs communication in response to the message by using a protocol (for example, MAP (Mobile Application Part)) different from the IP with the HLR 13 and the SMSC 14. When the relay device 32 receives a message transmitted using a predetermined protocol (for example, the MAP) from the SMSC 14, the relay device 32 performs communication in response to the message with the GW 21 via the server 31.

In the following explanation, the UEs 2b, 2c are considered to be in the communication area 10a and capable of performing communication via the base station (capable of connecting to the mobile network 10), and the UE 2d is considered to be in the communication area 10b and capable of performing communication via the base station. The UE 2a is considered to be out of the communication area of the mobile network 10 and unable to connect to the mobile network 10. The UEs 2a, 2b, 2c form a group for performing the inter-terminal direct communication, and the UE 2b is considered to perform communication with the GW 21 managing that group.

Subsequently, configurations of the server 31 and the relay device 32 will be explained. Configurations of the other nodes as illustrated in Fig. 1 is well known to a person skilled in the art, and therefore, the explanation thereabout is omitted.

First, the configuration of the server 31 will be explained.

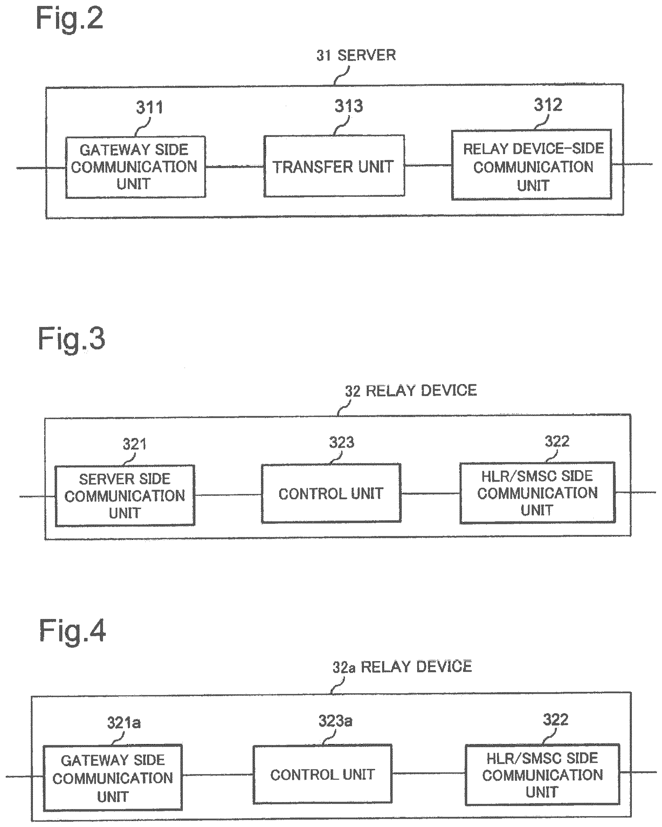

Fig. 2 is a block diagram illustrating a configuration of a main portion of the server 31.

The server 31 as illustrated in Fig. 2 includes a gateway side communication unit 311, a relay device-side communication unit 312, and a transfer unit 313.

The gateway side communication unit 311 performs communication with the GW 21.

The relay device-side communication unit 312 performs communication with the relay device 32.

The transfer unit 313 obtains management information including identification information about a UE which belongs to the group managed by the GW 21 from the GW 21 via the gateway side communication unit 311. Then, the transfer unit 313 manages, on the basis of the obtained management information, a correspondence table associating the identification information about a UE 2 with which group the UE 2 belongs to among the groups managed by the GW31. It should be noted that multiple groups including multiple UEs 2 performing the inter-terminal direct communication may be formed. In this case, the GW 21 is provided in each group, and the transfer unit 313 obtains the management information from each GW 21.

When the transfer unit 313 receives a message transmitted from the GW 21 via the gateway side communication unit 311, the transfer unit 313 transfers the message to another GW 21 or the relay device 32. When the transfer unit 313 receives a message transmitted from the relay device 32 via the relay device-side communication unit 312, the transfer unit 313 transfers the message to the GW 21.

Subsequently, the configuration of the relay device 32 will be explained.

Fig. 3 is a block diagram illustrating a configuration of a main portion of the relay device 32.

The relay device 32 as illustrated in Fig. 3 includes a server side communication unit 321, an HLR/SMSC side communication unit 322, and a control unit 323.

The server side communication unit 321 uses a predetermined protocol (for example, the IP) to communicate with the server 31.

The HLR/SMSC side communication unit 322 uses a predetermined protocol (for example, the MAP) to communicate with a device (HLR 13 and SMSC 14) in the mobile network 10.

When the control unit 323 receives a message transmitted using a predetermined protocol (for example, the IP) from the server 31 via the server side communication unit 321, the control unit 323 uses a predetermined protocol (for example, the MAP) to perform communication in response to the received message with the device in the mobile network 10 via the HLR/SMSC side communication unit 322. When the control unit 323 receives a message transmitted using a predetermined protocol (for example, the MAP) from the device in the mobile network 10 via the HLR/SMSC side communication unit 322, the control unit 323 uses a predetermined protocol (for example, the IP) to perform communication in response to the received message via the server side communication unit 321 with the server 31.

In the present exemplary embodiment, the server 31 and the relay device 32 are described separately, but the function of the server 31 may be implemented on the relay device to be made into a single device (relay device 32a) as illustrated in Fig. 1. The configuration of the relay device 32a will be explained with reference to Fig. 4. In Fig. 4, explanation about a configuration similar to Fig. 3 is omitted.

The relay device 32a as illustrated in Fig. 4 includes a gateway side communication unit 321a, an HLR/SMSC side communication unit 322, and a control unit 323a. The HLR/SMSC side communication unit 322 is an example of a first communication unit, and the gateway side communication unit 321a is an example of a second communication unit.

The gateway side communication unit 321a uses a predetermined protocol to perform communication with the GW 21.

The control unit 323a includes not only the function of the control unit 323 but also the function of obtaining and storing management information from the GW 21 and the function of transferring a message transmitted from the GW 21 to another GW 21, which are possessed by the transfer unit 313.

Subsequently, operation of the communication system 1 will be explained.

As described above, multiple groups including multiple UEs 2 may be formed. In the communication system 1 according to the present exemplary embodiment, messages can be transmitted and received via the server 31 even between UEs 2 which belong to different groups.

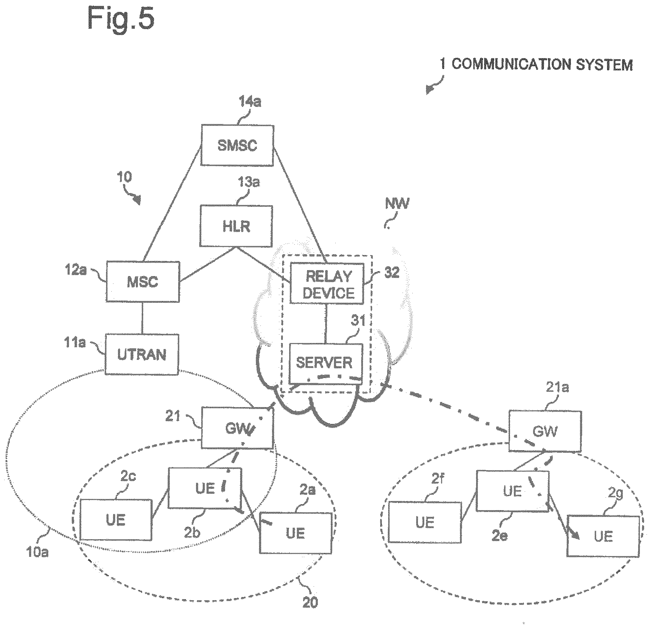

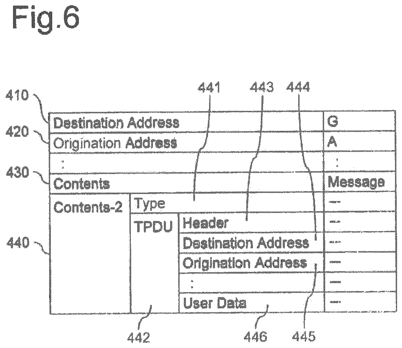

First, an operation for transmitting and receiving a message between UEs 2 which belong to different groups via the server 31 will be explained with reference to Fig. 5 and Fig. 6. Hereinafter, as illustrated in Fig. 5, a group managed by a GW 21a to which UEs 2e, 2f, and 2g belong is considered to be formed in addition to a group managed by a GW 21 to which UEs 2a, 2b, and 2c belong. In Fig. 5, the UTRAN 11b, the MSC 12b, the HLR 13b, the SMSC 14b, and the UE 2d are omitted. Hereinafter, explanation will be made by using an example in which a message is transmitted from the UE 2a to the UE 2g.

First, the UE 2a generates a message corresponding to an SMS message in the mobile network 10. Fig. 6 is a figure illustrating a structure of the message generated by the UE 2a.

As illustrated in Fig. 6, a message generated by the UE 2a is constituted by a Destination Address unit 410, an Origination Address unit 420, a first Contents unit 430, a second Contents (Contents-2) unit 440, and the like. The second Contents unit 440 is constituted by a Type unit 441 and a TPDU (Transmission Protocol Data Unit) unit 442. The TPDU unit 442 includes a Header unit 443, a Destination Address unit 444, an Origination Address unit 445, a User Data unit 446, and the like.

In a case where the UE 2a transmits a message to the UE 2g which belongs to a group different from the group to which the UE 2a belongs, an address (G) of the UE 2g, i.e., the transmission destination of the message, is set in the Destination Address unit 410. The UE 2a also sets an address (A) of the UE 2a, i.e., the transmission source of the message, in the Origination Address unit 420. The UE 2a sets the body of the message (Message) in the first Contents unit 430. The UE 2a causes the remaining portions to be unset (-).

Back to Fig. 5, the UE 2a performs the inter-terminal direct communication with the UE 2b to transmit the generated message to the UE 2b. Since the message received from the UE 2a is a message addressed to a UE which belongs to another group, the UE 2b transmits the message to the GW 21. The GW 21 transmits the message received from the UE 2b to the server 31.

Since the transmission destination of the message received from the GW 21 is the UE 2g which belongs to the group managed by the GW 21 a, the server 31 transmits the message to the GW 21 a. The GW 21 a transmits the message received from the server 31 to the UE 2e capable of communicating with the GW 21a. The UE 2e performs the inter-terminal direct communication with the UE 2g that is the transmission destination of the message received from the server 31 so as to transmit the message to the UE 2g.

As described above, by transmitting via the server 31, the message can be transmitted and received between UEs 2 which belong to different groups.

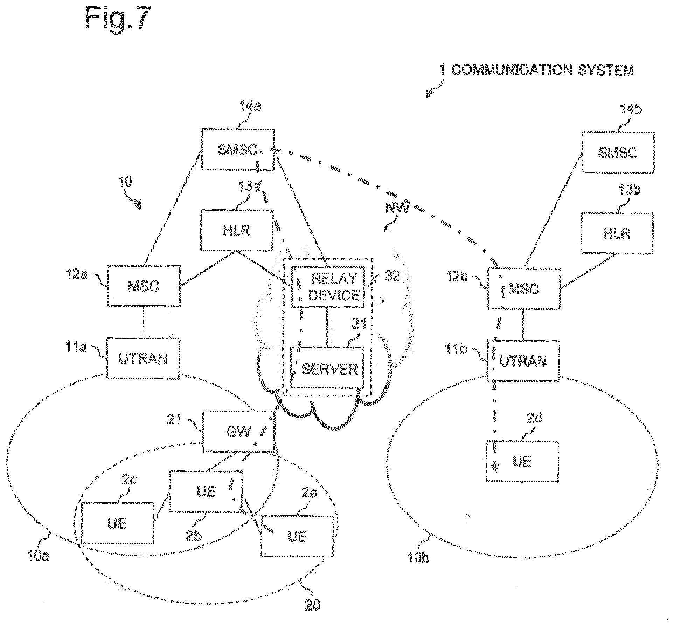

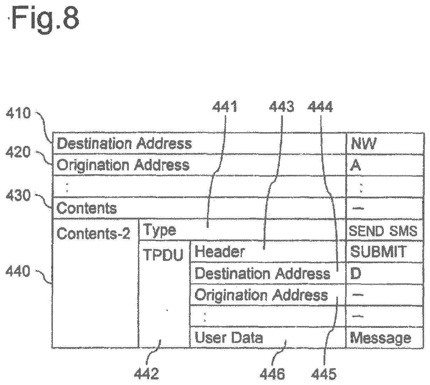

The case where messages are transmitted and received between UEs 2 which belong to different groups has been explained in Fig. 5. However, in the case where a message is transmitted from the UE 2a to the UE 2d as illustrated in Fig. 1, it is necessary to transmit a message via the mobile network 10. Hereinafter, an operation for transmitting a message from the UE 2a in the autonomous distributed network 20 to the UE 2d in the mobile network 10 will be explained with reference to Fig. 7 and Fig. 8.

First, the UE 2a generates a message corresponding to an SMS message in the mobile network 10, and as illustrated in Fig. 7, the UE 2a performs the inter-terminal direct communication with the UE 2b to transmit the generated message to the UE 2b.

In a case where a message is transmitted via the mobile network 10 to another UE 2, the UE 2a sets an address (NW) of the relay device 32 on a network NW in the Destination Address unit 410 as illustrated in Fig. 8. The UE 2a sets an address (A) of the UE 2a, i.e., the transmission source of the message, in the Origination Address unit 420. The UE 2a sets "send SMS" indicating a request of a transmission (send) of an SMS message, in the Type unit 441, and sets "SUBMIT" in the Header unit 443. The UE 2a sets an address (D) of the UE 2d, i.e., the transmission destination of the message, in the Destination Address unit 444. The UE 2a sets the body of the message (Message) in the User Data unit 446. The UE 2a causes the remaining portions to be unset (-).

Back to Fig. 7, since the address (NW) is set in the Destination Address unit 410 of the message received from the UE 2a, the UE 2b transmits the message to the GW 21. The GW 21 transmits the message received from the UE 2b to the server 31.

Since the address (NW) is set in the Destination Address unit 410 of the message received from the GW 21, the server 31 transmits the message to the relay device 32.

Since "send SMS" is set in the Type unit 441 of the message received from the server 31, the relay device 32 communicates with the SMSC 14a to request transmission of an SMS message according to the content set in the TPDU unit 442.

Upon receiving the request from the relay device 32, the SMSC 14a generates the SMS message in which the UE 2d is the transmission destination and the Message that is set in the User Data unit is the body, and transmits the generated message to the MSC 12b configured to manage the communication area 10b in which the UE 2d, i.e., the transmission destination of the message, is present. The MSC 12b transmits the message received from the SMSC 14a to the UE 2d via the UTRAN 11b.

As described above, when the relay device 32 receives, from the GW 21 via the server 31, a message indicating a request for transmission of an SMS message, the relay device 32 performs communication in response to the message (request of transmission of the SMS message) with the SMSC 14a, so that the message can be transmitted from the UE 2a via the mobile network 10 to the UE 2d.

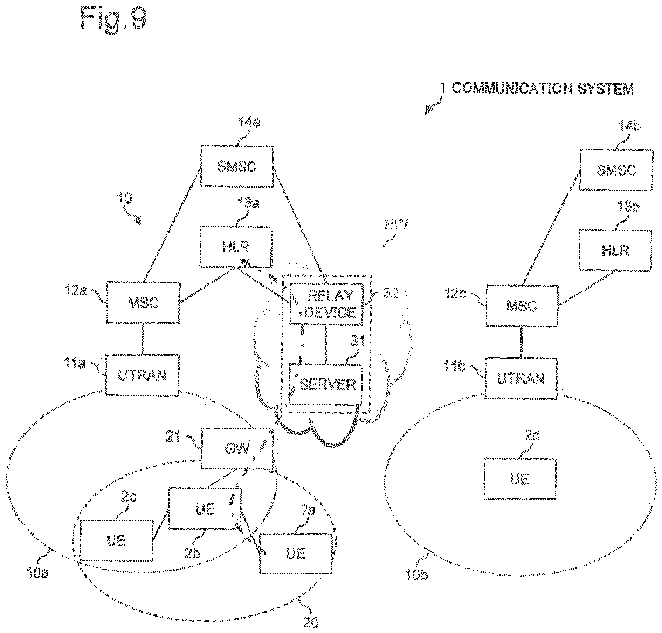

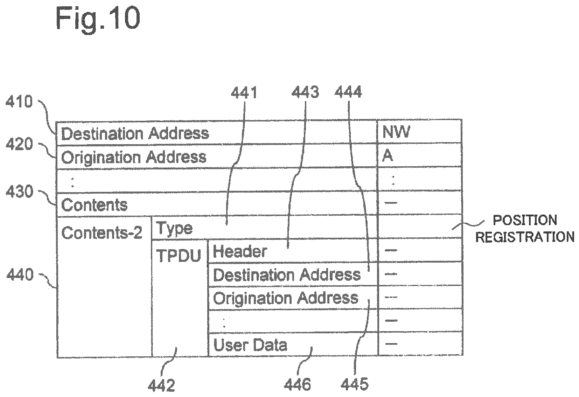

Subsequently, an operation for transmitting a message from the UE 2d in the mobile network 10 to the UE 2a in the autonomous distributed network 20 will be explained with reference to Fig. 9 and Fig. 10. In this case, by using the relay device 32, a message can also be transmitted from the UE 2d to the UE 2a. In this case, however, the position of the UE 2a has to be registered in the HLR 13a. However, since the UE 2a is not in the communication area 10a or 10b, and the UE 2a is unable to perform position registration by connecting to the mobile network 10. In the present exemplary embodiment, a UE 2 that is not present in the communication area of the mobile network 10 can also perform the position registration by using the relay device 32. Therefore, first, an operation of the UE 2a during position registration will be explained.

First, the UE 2a generates a message indicating a request for position registration, and as illustrated in Fig. 9, the UE 2a performs the inter-terminal direct communication with the UE 2b to transmit the generated message to the UE 2b.

In a case where the UE 2a requests the position registration, the UE 2a sets the address (NW) of the relay device 32 on the network NW in the Destination Address unit 410 as illustrated in Fig. 10. The UE 2a sets the address (A) of the UE 2a, i.e., the transmission source of the message, in the Origination Address unit 420. The UE 2a sets "position registration" indicating a request for position registration in the Type unit 441. The UE 2a causes the remaining portions to be unset (-).

Back to Fig. 9, since the address (NW) is set in the Destination Address unit 410 of the message received from the UE 2a, the UE 2b transmits the message to the GW 21. The GW 21 transmits the message received from the UE 2b to the server 31.

Since the address (NW) is set in the Destination Address unit 410 of the message received from the GW 21, the server 31 transmits the message to the relay device 32.

Since "position registration" is set in the Type unit 441 of the message received from the server 31, the relay device 32 requests the HLR 13a to register the position of the UE 2a.

Upon receiving a request from the relay device 32, the HLR 13a registers the position of the UE 2a. In the position registration of the UE 2 connected to the mobile network 10, the HLR 13 stores the subscriber information about the UE 2 and the position of the UE 2 (area in which the UE 2 is present) in such a manner that the subscriber information about the UE 2 and the position of the UE 2 are associated with each other. On the other hand, in a case where the relay device 32 requests the position registration of the UE 2, the HLR 13a stores the subscriber information about the UE 2 and the identification information about the relay device 32 in such a manner that the subscriber information about the UE 2 and the identification information about the relay device 32 are associated with each other (indicating that the UE 2 is managed by the relay device).

As described above, when the relay device 32 receives a message indicating a request for the position registration of the UE 2a from the GW 21 via the server 31, the relay device 32 performs the position registration of the UE 2a by performing communication required for the position registration of the UE 2a, in response to the message, with the HLR 13 a.

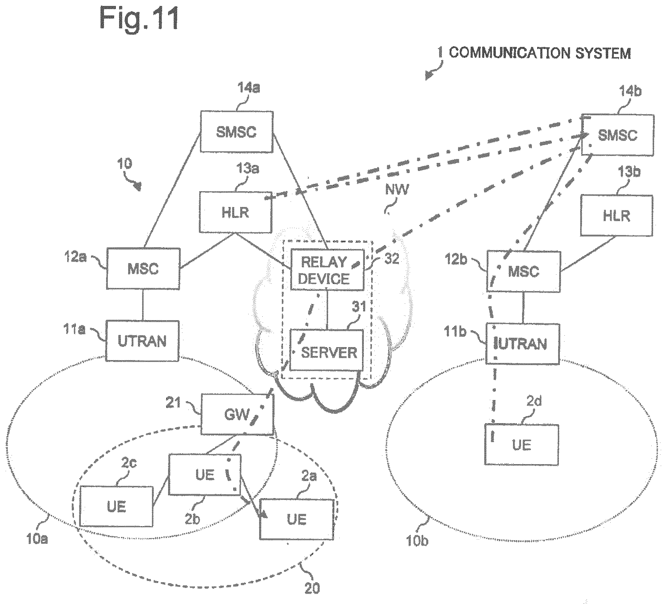

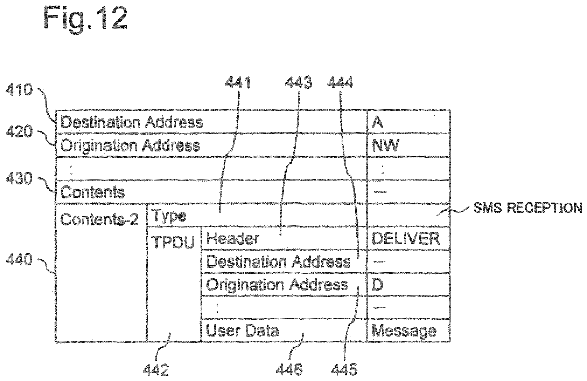

Subsequently, an operation for transmitting a message from the UE 2d in the mobile network 10 to the UE 2a in the autonomous distributed network 20 will be explained with reference to Fig. 11 and Fig. 12. It should be noted that the position of the UE 2a is considered to have already been registered.

The UE 2d generates an SMS message in which the UE 2a is the transmission destination. As illustrated in Fig. 11, the message generated by the UE 2d is transmitted via the UTRAN 11b and the MSC 12b to the SMSC 14b.

When the SMSC 14b receives the SMS message in which the UE 2a is the transmission destination, the SMSC 14b refers to the HLR 13a to identify the transmission (delivery) destination of the SMS message in which the UE 2a is the transmission destination. In this case, as explained in Fig. 9, the position of the UE 2a has already been registered in the HLR 13a, and the identification information about the relay device 32 has been stored in association with the subscriber information about the UE 2a. Therefore, the SMSC 14b uses a predetermined protocol (for example, the MAP) to request the relay device 32 to transmit the SMS message in which the UE 2a is the transmission destination.

When the relay device 32 is requested by the SMSC 14b to transmit the SMS message in which the UE 2a is the transmission destination by using a predetermined protocol (for example, the MAP), the relay device 32 uses a predetermined protocol (for example, the IP) to communicate with the server 31 to transmit a message which corresponds to the SMS message and in which the UE 2a is the transmission destination.

The server 31 transmits the message transmitted from the relay device 32 to the GW 21. The GW 21 transmits the message transmitted from the server 31 to the UE 2b, and the UE 2b transmits the message transmitted from the GW 21 to the UE 2a.

Fig. 12 illustrates a figure illustrating a message received by the UE 2a.

As illustrated in Fig. 12, the address (A) of the UE 2a, i.e., the transmission destination of the SMS message, is set in the Destination Address unit 410. The address (NW) of the relay device 32 on the network NW is set in the Origination Address unit 420. "SMS reception" indicating a request for reception (reception) of an SMS message is set in the Type unit 441, and "DELIVER" is set in the Header unit 443. The address (D) of the UE 2d, i.e., the transmission source of the SMS message, is set in the Origination Address unit 445. The body of the SMS message is set in the User Data unit 446. The remaining portions are unset (-).

As described above, when the position of the UE 2a, which cannot connect to the mobile network 10, is registered and the relay device 32 receives an SMS message from the SMSC 14b, the relay device 32 performs communication, in response to the message, via the server 31 with the GW 21 to request transmission of a message on the autonomous distributed network 20, so that the message can be transmitted from the UE 2d to the UE 2a via the mobile network 10.

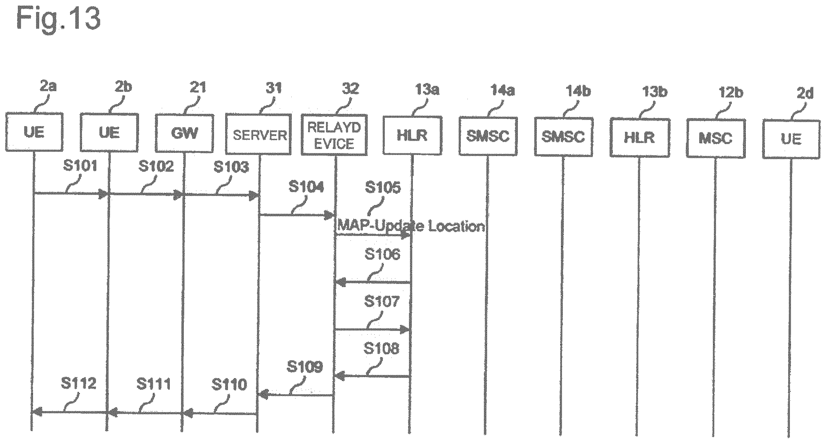

Subsequently, an operation of the communication system 1 will be explained with reference to sequence diagrams as illustrated in Fig. 13 to Fig. 15. In the following explanation, between the server 31 and the relay device 32, a communication using the IP is considered to be performed. In the following explanation, between the relay device 32 and the HLR 13/SMSC 14, a communication using the MAP is considered to be performed. In Fig. 13 to Fig. 15, description of a portion of the configuration illustrated in Fig. 1 is omitted.

Fig. 13 is a figure illustrating a signal sequence during the position registration of the UE 2a. For example, when a predetermined application is installed on the UE 2, a function for transmitting a message corresponding to an SMS message in the autonomous distributed network 20 can be implemented on the UE 2. The position registration of the UE 2 that cannot connect to the mobile network 10 is performed, for example, during booting that application.

First, the UE 2a generates a message indicating a request for position registration, and transmits the generated message to the UE 2b (step S101). The UE 2b transmits the message received from the UE 2a to the GW 21 (step S102), and the GW 21 transmits the message received from the UE 2b to the server 31 (step S103).

When the server 31 receives a message from the GW 21, the server 31 performs communication with the relay device 32 by using the IP, and transmits a message indicating a request for the position registration of the UE 2a to the relay device 32 (step S104).

When the relay device 32 receives a message indicating a request for the position registration of the UE 2a from the server 31, the relay device 32 uses the MAP to communicate with the HLR 13a, for performing the position registration of the UE 2a. More specifically, first, the relay device 32a transmits, to the HLR 13a, MAP-Update Location indicating a request for position registration (step S105).

When the HLR 13a receives the MAP-Update Location from the relay device 32, the HLR 13a transmits, to the relay device 32, a message indicating a request for the subscriber information about the UE 2a whose position is to be registered (step S106). When the relay device 32 receives the message, the relay device 32 transmits the subscriber information about the UE 2a to the HLR 13a (step S107). The HLR 13a uses the subscriber information transmitted from the relay device 32 to register the position of the UE 2a, and transmits a message indicating completion of the position registration to the relay device 32 (step S108).

When the relay device 32 receives the message indicating the completion of the position registration of the UE 2a from the HLR 13a, the relay device 32 performs communication with the server 31 by using the IP to transmit reception acknowledgement (Ack) (step S109). Thereafter, the reception acknowledgement is successively transmitted to the GW 21, the UE 2b, and the UE 2a (step S110 to step S112).

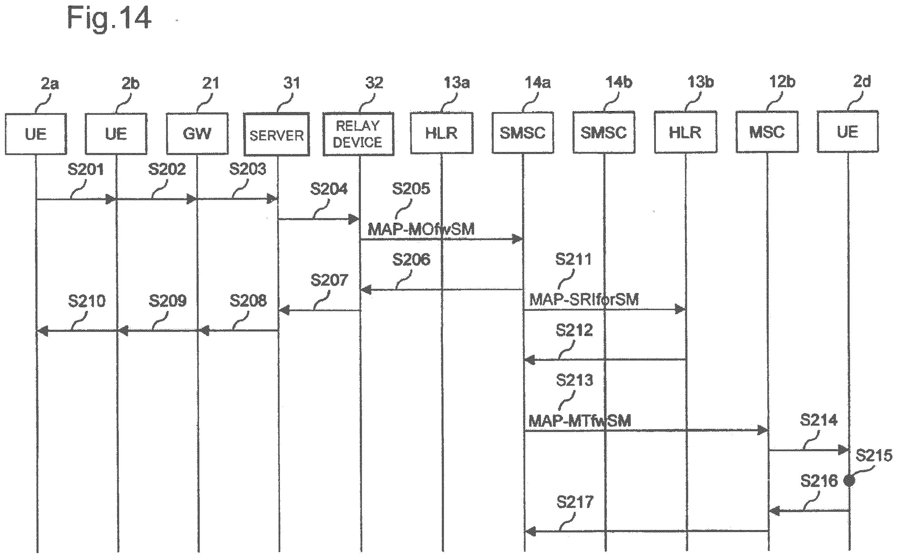

Subsequently, an operation during transmission of a message from the UE 2a to the UE 2d will be explained with reference to a sequence diagram as illustrated in Fig. 14.

First, the UE 2a generates a message (Fig. 8) which corresponds to an SMS message and in which the UE 2d is the transmission destination, and transmits the generated message to the UE 2b (step S201). The UE 2b transmits the message received from the UE 2a to the GW 21 (step S202), and the GW 21 transmits the message received from the UE 2b to the server 31 (step S203).

When the server 31 receives the message from the GW 21, the server 31 performs communication with the relay device 32 by using the IP, and transmits, to the relay device 32, a message which corresponds to an SMS message and in which the UE 2d is the transmission destination (step S204).

When the relay device 32 receives, from the server 31, the message which corresponds to the SMS message and in which the UE 2d is the transmission destination, the relay device 32 uses the MAP to perform communication with the SMSC 14a, for transmitting the SMS message to the UE 2d. More specifically, the relay device 32 transmits MAP-MO (Mobile Originated) fw SM to the SMSC 14a (step S205). When the SMSC 14a receives the MAP-MO fw SM, the SMSC 14a transmits reception acknowledgement to the relay device 32 (step S206). Thereafter, the reception acknowledgement is successively transmitted to the server 31, the GW 21, the UE 2b, and the UE 2a (step S207 to step S210).

When the SMSC 14a receives the MAP-MO fw SM, the SMSC 14a transmits, to the HLR 13b in which the position of the UE 2d has been registered, MAP-SRI (Send Routing Information) for SM indicating a request for routing information of an SMS message (step S211). When the HLR 13b receives the MAP-SRI for SM from the SMSC 14a, the HLR 13b transmits reception acknowledgement including the routing information to the SMSC 14a (step S212).

When the SMSC 14a receives the reception acknowledgement from the HLR 13b, the SMSC 14a transmits MAP-MT (Mobile Terminated) fw SM to the MSC 12b managing the communication area 10b in which the UE 2d is present, on the basis of the routing information included in the reception acknowledgement (step S213). The MSC 12b transmits an SMS message via the UTRAN 11b to the UE 2d (step S214).

When the UE 2d receives the SMS message (step S215), the UE 2d transmits reception acknowledgement to the MSC 12b (step S216). When the MSC 12b receives the reception acknowledgement from the UE 2d, the MSC 12b transmits the reception acknowledgement to the SMSC 14a (step S217).

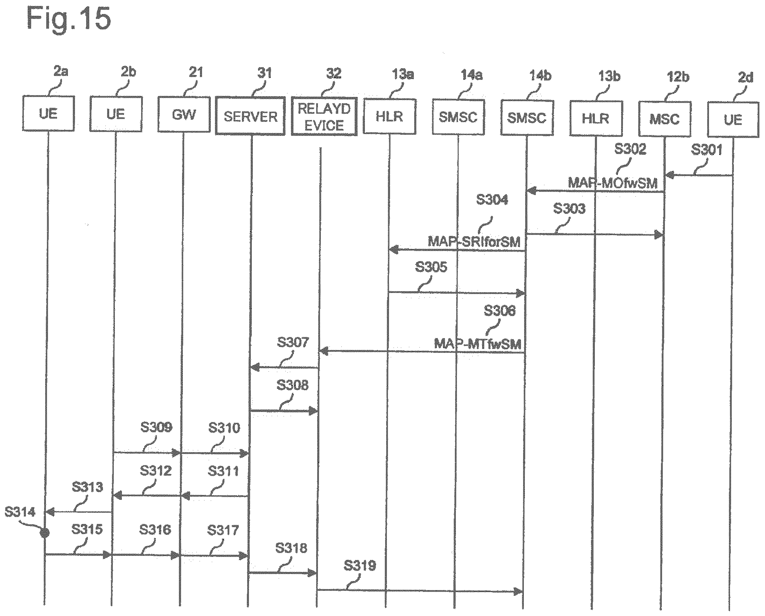

Subsequently, an operation during transmission of a message from the UE 2d to the UE 2a will be explained with reference to a sequence diagram as illustrated in Fig. 15.

First, the UE 2d generates an SMS message, and transmits the SMS message via the UTRAN 11b to the MSC 12b (step S301). When the MSC 12b receives the SMS message, the MSC 12b transmits MAP-MO fw SM to the SMSC 14b (step S302). When the SMSC 14b receives MAP-MO fw SM from the MSC 12b, the SMSC 14b transmits reception acknowledgement to the MSC 12b (step S303).

The SMSC 14b transmits MAP-SRI for SM to the HLR 13a in which the position of the UE 2a has been registered (step S304). When the HLR 13a receives the MAP-SRI for SM from the SMSC 14b, the HLR 13a transmits reception acknowledgement including routing information to the SMSC 14b (step S305). As described above, in the HLR 13a, information indicating that the UE 2a is managed by the relay device 32 is registered in association with the subscriber information about the UE 2a. Therefore, the HLR 13a incorporates the routing information indicating that the UE 2a is managed by the relay device 32 into the reception acknowledgement, and transmits the reception acknowledgement to the SMSC 14b.

When the SMSC 14b receives the reception acknowledgement from the HLR 13a, the SMSC 14b transmits MAP-MT fw SM to the relay device 32 configured to manage the UE 2a, on the basis of the routing information included in the reception acknowledgement (step S306).

When the relay device 32 receives the MAP-MT fw SM transmitted from the SMSC 14b by using the MAP, the relay device 32 performs communication with the server 31 by using the IP, and transmits a message which corresponds to an SMS message and in which the UE 2a is the transmission destination (step S307). When the server 31 receives the message, the server 31 transmits reception acknowledgement to the relay device 32 (step S308).

For example, with a predetermined time interval, the UE 2b transmits, to the GW 21, a message for inquiring whether there is a message in which a UE 2 which belongs to the group to which the UE 2b belongs is the transmission destination (step S309). When the GW 21 receives the message, the GW 21 transmits, to the server 31, a message for inquiring whether there is a message in which a UE 2 which belongs to the group managed by the GW21 is the transmission destination (step S310).

Since the server 31 has received a message in which the UE 2a is the transmission destination, the server 31 transmits the message to the GW 21 (step S311). The GW 21 transmits the message received from the server 31 to the UE 2b (step S312), and the UE 2b transmits the message received from the GW 21 to the UE 2a (step S313).

When the UE 2a receives the message transmitted from the UE 2b (step S314), the UE 2a transmits reception acknowledgement to the UE 2b (step S315). Thereafter, the reception acknowledgement is successively transmitted to the GW 21, the server 31, the relay device 32, and the SMSC 14b (step S316 to step S319).

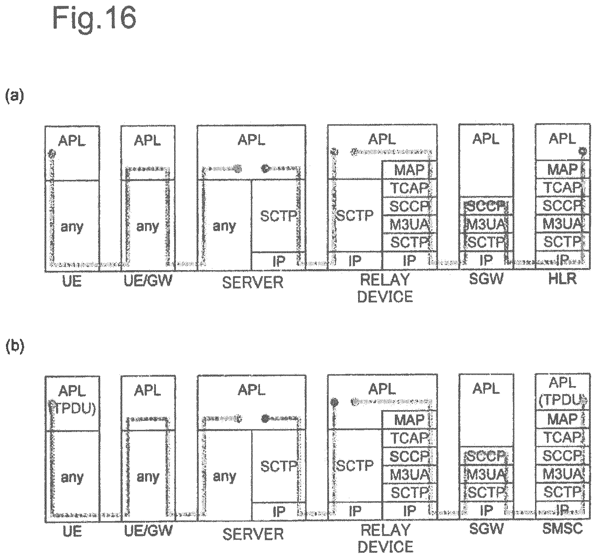

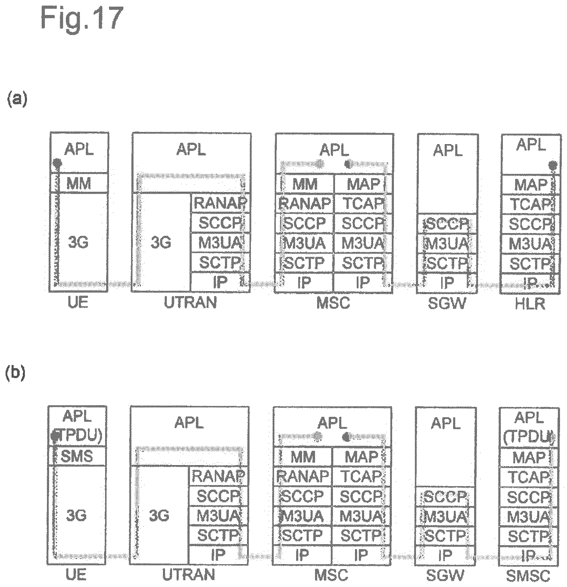

Subsequently, an example of a protocol stack of each node in the communication system 1 according to the present exemplary embodiment will be explained with reference to Figs. 16 (a), 16 (b), and 17. Figs. 16 (a), 16 (b), and 17 also describe SGW (Signalling GW) used during communication using the MAP.

The protocol stack is a conceptual hierarchical structure, and in Figs. 16 (a), 16 (b), and 17, during message transmission, communication data flows from an upper layer to a lower layer in order, and during reception, communication data flows from the lower layer to the upper layer in order.

Fig. 16 (a) is a figure illustrating a protocol stack of a node related to position registration of a UE 2 that cannot connect to the mobile network 10. Fig. 16 (b) is a figure illustrating a protocol stack of a node related to transmission and reception of a message of a UE 2 that cannot connect to the mobile network 10.

First, the protocol stack of the node related to the position registration of the UE 2 that cannot connect to the mobile network 10 will be explained.

In the protocol stack of the UE 2 and the GW 21, the application layer is disposed at the uppermost position, and under the application layer, any given protocol layer (any) is disposed according to a method of inter-terminal direct communication.

In the protocol stack of the server 31, the application layer is disposed at the uppermost position. Under the application layer, a stack on the GW 21 side which includes any given protocol layer (any) according to a method of inter-terminal direct communication and a stack on the relay device 32 side including an SCTP (Stream Control Transmission Protocol) layer and an IP layer are arranged in parallel.

In the protocol stack of the relay device 32, the application layer is disposed at the uppermost position, and under the application layer, a stack on the server 31 side and a stack on the SGW side are disposed in parallel. The stack on the server 31 side includes an SCTP layer and an IP layer. The stack on the SGW side includes a MAP layer, a TCAP (Transaction Capabilities Application Part) layer, an SCCP (Signalling Connection Control Part) layer, an M3UA (Message Transfer Part3 User Adaptation) layer, an SCTP layer, and an IP layer.

In the protocol stack of the SGW, the application layer is at the uppermost position. An SCCP layer, an M3UA layer, an SCTP layer, and an IP layer are disposed under the application layer.

In the protocol stack of the HLR and the SMSC, the application layer is disposed at the uppermost position. A MAP layer, a TCAP layer, an SCCP layer, an M3UA layer, an SCTP layer, and an IP layer are disposed under the application layer.

When the application layer of the server 31 receives, from the GW 21, a message according to a method of inter-terminal direct communication, the application layer of the server 31 performs communication with the relay device 32, in response to the received message by using the IP via the stack on the relay device 32 side. When the application layer of the server 31 receives a message transmitted form the relay device 32 by using the IP, the application layer of the server 31 performs communication with the GW 21, in response to the received message according to a method of inter-terminal direct communication via the stack on the GW 21 side.

When the application layer of the relay device 32 receives, from the GW 21, the message transmitted from the GW 21 by using the IP, the application layer of the relay device 32 performs communication with the HLR 13 or the SMSC 14, in response to the received message via the stack on the SGW side. More specifically, in a case where a message transmitted from the GW 21 by using the IP requests position registration of a UE, the application layer of the relay device 32 uses the MAP to perform communication with the HLR 13 for performing the position registration of the UE 2 (Fig. 16 (a)). In a case where the message transmitted from the GW 21 using the IP requests transmission of an SMS message, the application layer of the relay device 32 uses the MAP to perform communication with the SMSC 14 for performing communication for transmitting an SMS message (Fig. 16 (b)). In a case where the message transmitted from the SMSC 14 using the MAP requests a delivery of an SMS message to the UE 2, the application layer of the relay device 32 uses the IP to perform communication with the server 31 for delivering a message corresponding to an SMS message to the UE 2 (Fig. 16 (b)).

Fig. 17 (a) is a figure illustrating a protocol stack of a node related to position registration of a UE 2 that can connect to the mobile network 10. Fig. 17 (b) is a figure illustrating a protocol stack of a node related to transmission and reception of a message of a UE 2 that can connect to the mobile network 10.

In the protocol stack of the UE 2, the application layer is disposed at the uppermost position. An MM (Mobility Management) layer for controlling position registration (Fig. 17 (a)) or a SMS layer for controlling transmission and reception of an SMS message (Fig. 17 (b)) are disposed under the application layer. Under the MM layer or the SMS layer, a protocol layer (3G) for performing wireless communication according to a communication method such as SMS, 3G, LTE, or the like is disposed.

In the protocol stack of the UTRAN 11, the application layer is disposed at the uppermost position. A stack on the UE 2 side including a 3G layer and a stack on the MSC 12 side are disposed in parallel under the application layer. The stack on the MSC 12 side includes an RANAP layer, an SCCP layer, an M3UA layer, an SCTP layer, and an IP layer.

In the protocol stack of the MSC, the application layer is disposed at the uppermost position. A stack on the UTRAN 11 side and a stack on the SGW side are disposed in parallel under the application layer. The stack on the UTRAN 11 side includes an MM layer, an RANAP () layer, an SCCP layer, an M3UA layer, an SCTP layer, and an IP layer. The stack on the SGW side includes an MAP layer, a TCAP layer, an SCCP layer, an M3UA layer, an SCTP layer, and an IP layer.

The protocol stacks of the SGW, the HLR 13, and the SMSC are similar to those of Figs. 16 (a) and 16 (b), and are therefore omitted. The position registration of the UE 2 that can connect to the mobile network 10 and the transmission and reception of messages are not directly related to the present invention, and therefore, explanation thereabout is omitted.

As descried above, the communication system 1 according to the present exemplary embodiment includes the relay device 32, which, when the relay device 32 receives a message transmitted using a predetermined protocol from one of the SMSC 14 and the GW 21, the relay device performs communication in response to the received message with the other of the SMSC 14 and the GW 21 by using a protocol that is different from the predetermined protocol and that is used for communication with the other of the SMSC 14 and the GW 21.

This enables communication between the mobile network 10 and the autonomous distributed network 20, and prevents occurrence of a communication failure, such as a failure in which any message cannot be transmitted and received.

The relay device 32 according to the present exemplary embodiment appears to be the same as ordinary (existing) MSC from the perspective of the MSC 12, the HLR 13, and the SMSC 14. Therefore, it is not necessary to modify an existing node such as the MSC 12, the HLR 13, the SMSC 14, or the like, and therefore, the effect on the existing communication system can be suppressed.

It should be noted that a method performed in each node of the present exemplary embodiment may be implemented in a program to be executed by a computer. The program can be stored in a semiconductor storage device such as ROM (Read Only Memory), RAM (Random Access Memory), and a computer readable non-transitory recording medium such as an optical disc, a magnetic disk, or a magneto-optical disc, and can also be provided to the outside via a network.

This application claims the priority based on Japanese Patent Application No. 2014-144360 filed on July 14, 2014, and the entire disclosure thereof is incorporated herein by reference.

### [Reference signs List]

- 1: communication system
- 2: UE
- 10: mobile network
- 11: UTRAN
- 12: MSC
- 13: HLR
- 14: SMSC
- 21: GW
- 31: server
- 32: relay device
- 311: gateway-side communication unit
- 312: relay device-side communication unit
- 313: transfer unit
- 321: server side communication unit
- 322: HLR/SMSC side communication unit
- 323, 323a: control unit
- 321a: gateway-side communication unit

## Claims

1. A communication system comprising:
a service control device provided in a first network in which a user equipment performs communication via a wireless base station, and configured to deliver a message to the user equipment;
a gateway device provided in a second network in which a plurality of user equipments perform direct communication, and configured to perform communication with at least one of the plurality of user equipments; and
a relay device configured to, when the relay device receives a message transmitted using a predetermined protocol from one of the service control device and the gateway device, use a protocol that is different from the predetermined protocol and that is used for communication with the other of the service control device and the gateway device to perform communication in response to the received message with the other of the service control device and the gateway device.

2. The communication system according to claim 1, wherein when the relay device receives, from the gateway device, a message in the second network in which a user equipment in the first network is a transmission destination, the relay device requests the service control device to transmit a message in the first network which corresponds to the received message.

3. The communication system according to claim 1 or 2, wherein when the relay device receives, from the service control device, a message in the first network in which a user equipment in the second network is a transmission destination, the relay device requests the gateway device to transmit a message in the second network which corresponds to the received message.

4. The communication system according to any one of claims 1 to 3, further comprising a management device in which a position of a user equipment in the first network is registered,
wherein when the relay device receives, from the gateway device, a message indicating a request for position registration of a user equipment in the second network, the relay device requests the management device to perform position registration of the user equipment.

5. A relay device comprising:
first communication means for communicating with a service control device that is provided in a first network in which a user equipment performs communication via a wireless base station and that is configured to deliver a message to the user equipment;
second communication means for communicating with a gateway device that is provided in a second network in which a plurality of user equipments perform direct communication and that is configured to perform communication with at least one of the plurality of user equipments; and
control means configured to, when the control means receives a message transmitted using a predetermined protocol from one of the service control device and the gateway device, use a protocol that is different from the predetermined protocol and that is used for communication with the other of the service control device and the gateway device to perform communication in response to the received message with the other of the service control device and the gateway device.

6. The relay device according to claim 5, wherein when the control means receives, from the gateway device via the second communication means, a message in the second network in which a user equipment in the first network is a transmission destination, the control means requests, via the first communication means, the service control device to transmit a message in the first network that corresponds to the received message.

7. The relay device according to claim 5 or 6, wherein when the control means receives, from the service control device via the first communication means, a message in the first network in which a user equipment in the second network is a transmission destination, the control means requests, via the second communication means, the gateway device to transmit a message in the second network that corresponds to the received message.

8. The relay device according to any one of claims 5 to 7, wherein the first communication means further communicates with a management device which is provided in the first network and in which a position of a user equipment in the first network is registered,
wherein when the control means receives, from the gateway device via the second communication means, a message indicating a request for position registration of a user equipment in the second network, the control means requests, via the first communication means, the management device to perform position registration of the user equipment.

9. A control method of a relay device, wherein the relay device is provided with first communication means for communicating with a service control device that is provided in a first network in which a user equipment performs communication via a wireless base station and that is configured to deliver a message to the user equipment, and second communication means for communicating with a gateway device that is provided in a second network in which a plurality of user equipments perform direct communication and that is configured to perform communication with at least one of the plurality of user equipments,
when the relay device receives a message transmitted using a predetermined protocol from one of the service control device and the gateway device, the relay device uses a protocol that is different from the predetermined protocol and that is used for communication with the other of the service control device and the gateway device to perform communication in response to the received message with the other of the service control device and the gateway device.

10. A computer readable non-transitory recording medium recorded with a program for causing a computer to execute:
processing for communicating with a service control device provided in a first network in which a user equipment performs communication via a wireless base station and configured to deliver a message to the user equipment;
processing for communicating with a gateway device provided in a second network in which a plurality of user equipments perform direct communication and configured to perform communication with at least one of the plurality of user equipments; and
processing for, when receiving a message transmitted using a predetermined protocol from one of the service control device and the gateway device, performing communication in response to the received message with the other of the service control device and the gateway device using a protocol that is different from the predetermined protocol and that is used for communication with the other of the service control device and the gateway device.
